# EUROPEAN PATENT SPECIFICATION

(11) **EP 2 359 406 B1**
(45) Date of publication and mention of the grant of the patent: **17.07.2013**
(21) Application number: 09828452.4
(22) Date of filing: 27.11.2009
(51) Int. Cl.: H01L 31/00, H02N 6/00, H01G 9/20

(54) **PHOTOVOLTAIC DEVICES**
PHOTOVOLTAISCHE ELEMENTE
DISPOSITIFS PHOTOVOLTAÏQUES

(30) Priority: 27.11.2008 AU 2008906149
(43) Date of publication of application: 24.08.2011
(73) Proprietor: Monash University, Clayton VIC 3168 (AU)
(72) Inventor: BACH, Udo, Hawthorn Victoria 3122 (AU); FU, Dongchuan, Clayton Victoria 3168 (AU)
(74) Representative: Aulich, Martin
(86) International application number: PCT/AU2009/001555
(87) International publication number: WO 2010/060154

(56) References cited:
- WO-A1-98/53500
- US-A- 2 765 385
- US-A- 2 999 240
- US-A- 4 478 879
- US-A- 5 130 775
- US-A1- 2004 112 421
- US-B2- 7 405 793
- FUKE NOBUHIRO ET AL: "Electron transport in back contact dye-sensitized solar cells", JOURNAL OF APPLIED PHYSICS, AMERICAN INSTITUTE OF PHYSICS. NEW YORK, US, vol. 104, no. 6, 22 September 2008 (2008-09-22), pages 64307-64307, XP012117620, ISSN: 0021-8979, DOI: 10.1063/1.2975182
- DONGCHUAN FU ET AL: "Dye-Sensitized Back-Contact Solar Cells", ADVANCED MATERIALS, vol. 22, no. 38, 9 June 2010 (2010-06-09), pages 4270-4274, XP55026284, ISSN: 0935-9648, DOI: 10.1002/adma.201001006

## Description

### FIELD OF THE INVENTION

The present invention is generally directed to photovoltaic devices for generating electric power, and is in particular directed to a photovoltaic device having a photovoltaically active layer interpenetrated by an electrolyte for transporting charge.

### BACKGROUND TO THE INVENTION

Photovoltaic devices have been used over the last few decades as a source of electrical power. These devices are conventionally solid-state junction devices made predominantly from silicon. The relatively high fabrication cost and energy requirements for producing these devices have however limited their application as an alternative energy source. Furthermore, their rigid construction limits their application to relatively rigid and flat support surfaces and also makes them vulnerable to impact damage.

More recent developments have looked at photovoltaic devices that require less energy to produce and have lower fabrication costs. A development that shows significant potential are solar cells, known as "Dye-sensitised solar cells (DSCs)". These solar cells are a viable low cost alternative to conventional inorganic semiconductor solar cells. They can be produced from low cost starting materials with low tech fabrication methods with energy conversion efficiencies up to 11%. While conventional solar cells have higher efficiencies in the order of 15 to 20%, this is offset by their initial significantly higher fabrication costs compared with DSCs.

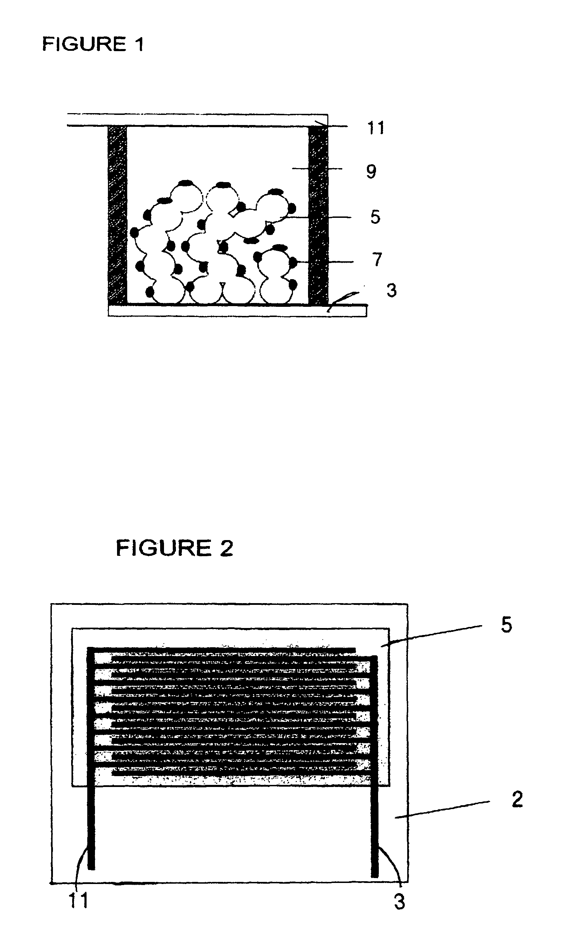

In the accompanying drawings, Figure 1 shows a known DSC 1 which consists of a conducting electrode (anode) 3, coated with a photovoltaically active layer in the form of a nanoporous (titanium dioxide) semiconductor electrode layer 5, a thin coating (ie one or several molecular monolayers) of photosensitive dye 7, covering the surfaces of this nanoporous semiconductor electrode layer 5, an electrolyte 9 interpenetrating the nanoporous semiconductor electrode 5, and a counter electrode (cathode) 11, to form the final sandwich structure of the DSC 1.

At least one of the conducting electrode 3 and counter electrode 11 need to be made of a transparent conductive material for the known DSC to operate. It would however be advantageous to utilise an alternative cell configuration that can eliminate the need for transparent conducting materials to be used for the electrodes. This can lead to significant reduction in fabrication costs as less expensive materials can be used.

Reference is made to an article from Fuke Nobuhiro et al., "Electron transport in back contact dye-sensitized solar cells" from JOURNAL OF APPLIED PHYSICS, American Institute of Physics, New York, US, volume 104, No. 6. 22 September 2008, pages 64307-1 - 64307-6. XP012117620 in which a back contact type dye-sensitized solar cell (DSSC) is described.

### BRIEF DESCRIPTION OF THE INVENTION

The present invention provides a photovoltaic device including cathode and anode electrodes, and a photovoltaically active layer located over both said electrodes. The cathode and anode electrodes are preferably located in an interdigitated arrangement on a common substrate. The photovoltaically active layer is preferably formed from a nanoporous semiconductor electrode layer having a monomolecular coating of photosensitive dye over the surfaces of said semiconductor electrode with an electrolyte interpenetrating the nanoporous semiconductor electrode layer.

In the present invention, both the anode and cathode electrodes are located on the same face of the photovoltaic device. Positive and negative charge carriers are generated within the photoactive layer situated above the electrodes. The anode electrode selectively collects negative charge carriers from the photovoltaically active layer, whereas the cathode electrode selectively collects positive charge carriers from the photovoltaically active layer.

According to one preferred embodiment, one or both of the electrodes may be electroplated, preferably the cathode electrode. The electrode(s) may preferably be electroplated with, for example, platinum. An insulating layer may optionally be deposited on at least one of the electrodes separating said electrode and the photovoltaically active layer. This insulating layer may be porous or an ion conductor. The insulating layer may for example be formed from zirconium oxide.

According to another preferred embodiment, the electrodes are preferably located in a co-planar arrangement with a series of apertures passing through at least the top said electrodes to expose an underlying said electrode. An insulating layer may be provided between said electrode layers.

In either of the above embodiments, the photovoltaically active layer is preferably formed from a nanoporous semiconductor electrode layer having a monomolecular coating of photosensitive dye over the surfaces of said semiconductor electrode with an electrolyte interpenetrating the nanoporous semiconductor electrode layer, with a transparent window encapsulating the solar cell. This window does not need to be conducting and can therefore be made of lower cost material. The semiconductor electrode layer may preferably be formed from titanium dioxide (TiO₂). It is also envisaged that other semiconductor materials such as ZnO. SnO₂. CdSe or CdTe could be used to form the nanoporous semiconductor layer.

According to another aspect of the present invention, there is provided a multi-junction solar cell configuration including a pair of photovoltaic devices as described above, wherein the devices are arranged in a sandwich arrangement such that the second medium for transporting charge is shared between said devices.

This enables 3 and 4 junction solar cells to be made using the above described photovoltaic devices.

According to a further aspect of the present invention, there is provided a method of producing a photovoltaic device including the steps of:
a) Laser ablating a conductive coating on a supporting substrate to form a cathode electrode and an anode electrode: the cathode and anode electrodes are preferably located in an interdigitated arrangement on a common substrate:
b) Electroplating at least one of the electrodes with a conducting layer; and
c) Coating the two electrodes with a nanoporous semiconductor layer. The photovoltaically active layer is preferably formed from a nanoporous semiconductor electrode layer having a monomolecular coating of photosensitive dye over the surfaces of said semiconductor electrode.

The electrode(s) may for example be electroplated with platinum. On one of the electrodes may also be deposited a porous insulating layer by means of an electrophoretic deposition step. This step allows a microstructure to be produced without any microfabrication process. The semiconductor layer may be formed from titanium dioxide exposed to a photosensitive dye. The use of other semiconductor materials are also envisaged as previously discussed.

According to yet another aspect of the present invention, there is provided a method of manufacturing a photovoltaic device including the steps of:
a) Coating a first conducting layer forming an anode electrode with an electrically insulating layer;
b) Coating the insulating layer with a second conducting layer to forming a cathode electrode;
c) Using laser ablation to perforate the second conducting layer and insulating layer with a series of cavities thereby exposing the underlying first conduction layer thereby forming an electrode structure; and
d) Coating said electrode structure with a nanoporous semiconductor layer.

The first conducting layer may be formed from a titanium sheet, while the second conducting layer may be formed from platinum.

While current developments in this area have utilised a dye layer as the photosensitive medium, it is also envisaged that the dye can be replaced with alternative photosensitive medium such as quantum dots on a thin layer of an inorganic adsorbent. Furthermore, the electrolyte could be replaced with an organic charge transport material or even a material that acts as a charge transport material and is light absorbing at the same time making the photosensitive medium redundant.

### BRIEF DESCRIPTION OF THE DRAWINGS

The present invention will now be described with reference to the accompanying drawings which illustrate preferred examples of the present invention. Other examples are also envisaged and consequently, the particularity of the accompanying drawings is not to be understood as superseding the generality of the preceding description of the invention.

In the drawings:
Figure 1 is a schematic cross-sectional view of a prior art dye-sensitised solar cell.
Figure 2 is a schematic view of the interdigitated electrodes of a first example embodiment of the DSC of present invention;
Figure 3 is a schematic view showing the fabrication steps required to produce the interdigitated electrodes of Figure 2.
Figure 4 is a schematic cross-sectional view of the completed first example embodiment of the DSC of the present invention;
Figure 5 is a schematic view of a second example embodiment of the DSC of the present invention;
Figure 6(a) and (b) are respective schematic views of a tandem DSC according to a third example embodiment of the present invention.

### DETAILED DESCRIPTION OF THE EXAMPLE EMBODIMENT

Figure 1 shows a prior art DSC arrangement, and the same reference numerals are used in the following description for corresponding features for clarity reasons.

Referring initially to Figure 2, the DSC 1 in this example embodiment a set of cathode and anode electrodes 3, 11 are deposited on a common substrate 2. This substrate can be made of a non-transparent material. The area where the two electrodes interdigitate is overprinted with a nanoporous TiO₂ layer 5, sensitised with a dye and filled with a redox electrolyte.

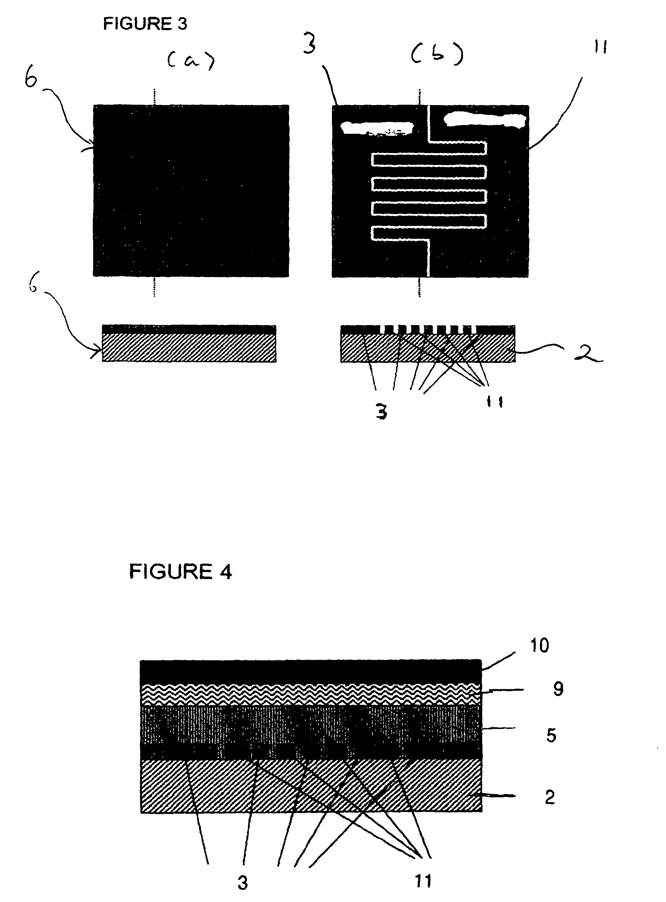

The interdigitated electrode structure shown in figure 2 can be produced by means of a micro or nanofabrication method coupled with the selective material deposition step at the cathode. The first step can be achieved by low-cost photolithography or laser ablation processes of a substrate (as shown in Figure 3a) like a titanium coated plastic film or fluorine doped tin oxide (conducting, transparent coating) coated glass 6 with a pattern as shown in Figure 3(b). Alternatively, the substrate may be a metal foil such as titanium or chromium. Laser ablation is used in order to remove stripes off the conducting coating, thereby generating two electrode areas that are electrically insulated from each other (cathode electrode 3 and anode electrode 11). Laser ablation is a parallel process that allows the ablation of complex structures by one or more laser pulses. The second step can be controlled electrochemically e.g. by electroplating the cathode with e.g. platinum. This is a crucial step in order to produce a set of two electrodes that expose different contact materials which preferentially collect positive and negative charge carriers respectively. The combination of step 1 and 2 offer a low cost microstructuring method to produce an asymmetric set of electrodes that avoids complex registration issues. Microfabrication methods that rely on a sequence of lithographic steps require mask alignment in respect to patterns created in previous lithography steps. This is referred to as 'registration'

To complete the solar cell, two-electrode substrate is coated with a nanoporous (TiO₂) semiconductor layer 5 that is exposed to a dye-solution and filled with an electrolyte 9 such as iodine/iodide. The DSC 1 can then be encapsulated with a transparent window 10 laminated on top of the substrate 2 (see figure 4). It should be noted that this window does not need to be formed of conducting material as in conventional DSCs.

Alternatively, in order to avoid direct contact between the (TiO₂) semiconductor layer 5 (collecting negative charge carriers) and the cathode 3 (collecting positive charge carriers) an intermittent layer of a porous insulator (not shown) can be deposited eg by electrophoretic deposition of a colloidal metal oxide that acts as insulator (e.g. zirconium oxide). During an electrophoretic deposition, charged particles migrate in an applied field between two electrodes and deposit onto the electrode that carries a charge opposite to the particle charge. Selective deposition on only one of the two electrodes can again be controlled electrochemically, so that complicated registration issues can be avoided. The porous insulator will allow ionic charge transport to the cathode (where iodine is reduced to iodide), while blocking charge transfer from the TiO₂ to the cathode.

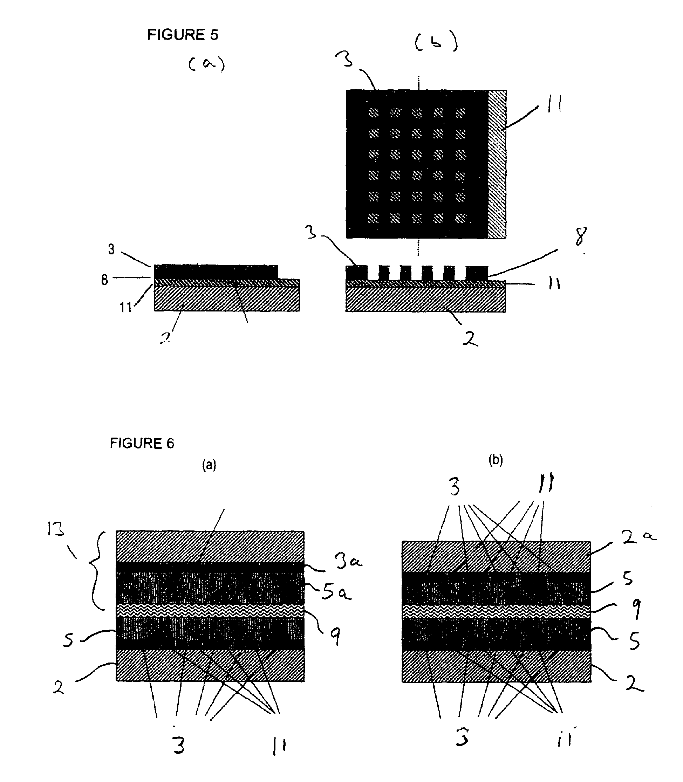

Figure 5 shows another example embodiment of DSC 1 according to the present invention. This DSC 1 consists of a titanium sheet (anode) 11 covered with an insulating layer 8 and a second conducting layer 3 (cathode, e.g. platinum). The anode layer 11 may optionally be supported on a separate substrate 2. Laser ablation is used to perforate the cathode layer 3 and insulating layer 8 in order to expose the underlying titanium metal anode layer 11. This laser ablation process yields an asymmetric pair of electrodes (Ti anode; Pt cathode) in one single process step. A complete solar cell can be assembled from this substrate simply by printing a nanoporous TiO₂ electrode on top of the electrode structure, and then exposing the layer to a dye solution, filling the layer with an electrolyte, and encapsulating the layers with a transparent window material as previously described. The optional deposition of the porous insulator 8 (variation) is also applicable to this geometry. This porous insulator can be conformally coated onto layer 11 and selectively removed during the laser ablation step.

The construction of the above described DSC configurations can also be readily adapted to produce tandem DSC cells, where the top window material is replaced with a conventional DSC photo anode or photo cathode (3 terminal cell) or a second back-contact electrode (4 terminal cell) as shown in figure 6(a) and (b) respectively.

As shown in Figure 6(a), a simple 3-terminal DSC can be realized simply by replacing the transparent window material 10 in the configuration shown in figure 4 with a conventional DSC electrode 13 (e.g. a dye-sensitised TiO₂ layer 5a printed on conducting glass 3a). A 4-terminal DSSC can be fabricated from the combination of 2 back-contact DSCs to a sandwich device as shown in Figure 6(b). In this case at least one of those 2 back-contact electrodes 3,11 needs to be deposited onto a transparent substrate 2a.

The DSCs having a configuration according to the present invention leads to a number of important practical advantages.

Firstly, it is the only DSC architecture to date that allows the production of DSCs on non-transparent substrates with a non-conducting top-window material.

It also allows the production of DSCs with a non-conducting top-window material. Such solar cells have the potential to achieve superior light harvesting, as transmission losses through the conventionally used transparent conducting electrode materials such as FTO or ITO are avoided.

The proposed DSCs architecture makes it easy to integrate low-cost DSCs onto electronic consumer products such as smart cards, RFID tags or any integrated circuit board.

Furthermore, the new device architecture is compatible with role-to-role fabrication methods that allow the low-cost high-throughput mass-production of DSCs.

The new DSC architecture allows the fabrication of multi-junction or tandem solar cells. Tandem solar cells have significantly higher theoretical energy conversion efficiencies for the conversion of sun-light into electricity.

Modifications and variations as would be deemed obvious to the person skilled in the art are included within the ambit of the present invention as claimed in the appended claims.

## Claims

1. A photovoltaic device, including cathode and anode electrodes (3, 11), with a photovoltaically active layer (5) located over both said electrodes (3, 11), **characterized in that** the cathode and anode electrodes are located in an interdigitated arrangement on a common substrate (2), and **in that** the photovoltaically active layer (5) is formed from a nanoporous titanium dioxide semiconductor electrode layer having a thin coating of photosensitive dye (7) over the surfaces of said semiconductor electrode layer, and an electrolyte interpenetrates the nanoporous semiconductor electrode layer for transporting charge.

2. A photovoltaic device according to claim 1 including a porous electrically insulating layer deposited on at least one of the electrodes (3. 11) between said electrode and the photovoltaically active layer.

3. A photovoltaic device according to claim 2, wherein the insulating layer is formed from zirconium oxide.

4. A photovoltaic device according to claim 1, the electrodes (3, 11) being located in a co-planar arrangement with a series of apertures passing through both said electrodes (3, 11) to expose an underlying said electrode (3; 11).

5. A photovoltaic device according to claim 4, further including an insulating layer between said electrodes (3, 11).

6. A photovoltaic device according to claim 1, further including a transparent non-conducting window for encapsulating the photovoltaic device.

7. A multi-junction solar cell configuration including a pair of photovoltaic devices according to any one of claims 1 to 5. wherein the devices are arranged in a sandwich arrangement such that a second medium for transporting charge is shared between said devices.

8. A method of producing a photovoltaic device **characterized by** the steps of:
a) Laser ablating a conductive coating on a supporting substrate (2) to form a cathode electrode (3) and an anode electrode (11) in an interdigitated arrangement on the supporting substrate:
b) Electroplating at least one of the electrodes (3, 11) with a conducting layer; and
c) Coating the two electrodes (3, 11) with a nanoporous semiconductor layer formed from a nanoporous titanium dioxide semiconductor electrode layer having a thin coating of photosensitive dye (7) over the surfaces of said semiconductor electrode layer.

9. A method according to claim 8, including electroplating the electrode(s) (3; 11) with platinum.

10. A method according to claim 8 or 9, including depositing a porous insulating layer on one of the electrodes (3; 11) by means of an electrophoretic deposition step.

11. A method according to claim 10, wherein the porous insulating layer is a colloidal metal oxide.

## Patentansprüche

1. Photovoltaisches Element, mit Kathoden- und Anodenelektroden (3, 11), mit einer photovoltaisch aktiven Schicht (5), die über den Elektroden (3, 11) angeordnet ist, **dadurch gekennzeichnet, dass** die Kathoden- und Anodenelektroden in einer ineinandergreifenden Anordnung auf einem gemeinsamen Substrat (2) angeordnet sind, und dass die photovoltaisch aktive Schicht (5) aus einer nanoporösen Titandioxidhalbleiterelektrodensohicht gebildet ist, die eine dünne Beschichtung eines photosensitiven Farbstoffs (7) auf den Oberflächen der Halbleiterelektrodenschicht aufweist, und dass ein Elektrolyt die nanoporöse Halbleiterelektrodenschicht durchdringt zum Transportieren von Ladung.

2. Photovoltaisches Element nach Anspruch 1, beinhaltend eine poröse elektrisch isolierende Schicht, die auf zumindest einer der Elektroden (3, 11) zwischen der Elektrode und der photovoltaisch aktiven Schicht aufgebracht ist.

3. Photovoltaisches Element nach Anspruch 2, wobei die isolierende Schicht aus Zirkoniumoxid gebildet ist.

4. Photovoltaisches Element nach Anspruch 1, wobei die Elektroden (3, 11) in einer co-planaren Anordnung mit einer Reihe Öffnungen angeordnet ist, die durch beide Elektroden (3, 11) hindurchtreten, um eine darunterliegende Elektrode (3; 11) freizulegen.

5. Photovoltaisches Element nach Anspruch 4, weiter beinhaltend eine isolierende Schicht zwischen den Elektroden (3, 11).

6. Photovoltaisches Element nach Anspruch 1, weiter beinhaltend ein transparentes nichtleitendes Fenster zum Verkapseln des photovoltaischen Elements.

7. Mehrfachsolarzellenkonfiguration, beinhaltend ein Paar photovoltaischer Elemente nach einem der Ansprüche 1 bis 5, wobei die Elemente in einer Schichtanordnung angeordnet sind, derart, dass ein zweites Medium zum Transportieren von Ladung von den Elementen gemeinsam benutzt wird.

8. Verfahren zum Herstellen eines photovoltaischen Elementes, **gekennzeichnet durch** die Schritte:
a) Laserablatieren einer leitenden Beschichtung auf einem tragenden Substrat (2), um eine Kathodenelektrode (3) und eine Anodenelektrode (11) in einer ineinandergreifenden Anordnung auf dem tragenden Substrat zu bilden;
b) Elektroplatieren zumindest einer der Elektroden (3, 11) mit einer leitenden Schicht; und
c) Beschichten der beiden Elektroden (3, 11) mit einer nanoporösen Halbleiterschicht, die aus einer nanoporösen Titandioxidhalbleiterelektrodenschicht gebildet ist, die eine dünne Beschichtung eines photosensitiven Farbstoffs (7) auf den Oberflächen der Halbleiterelektrodenschicht aufweist.

9. Verfahren nach Anspruch 8, beinhaltend ein Elektroplatieren der Elektrode(n) (3; 11) mit Platin.

10. Verfahren nach Anspruch 8 oder 9, beinhaltend ein Aufbringen einer porösen isolierenden Schicht auf eine der Elektroden (3; 11) mittels eines elektrophoretischen Aufbringschrittes.

11. Verfahren nach Anspruch 10, wobei die poröse isolierende Schicht ein kolloidales Metalloxid ist.

## Revendications

1. Dispositif photovoltaïque comprenant des électrodes cathodique et anodique (3, 11), avec une couche photovoltaïquement active (5) positionnée au-dessus desdites deux électrodes (3, 11), **caractérisé en ce que** les électrodes cathodique et anodique sont placées dans une configuration interdigitée sur un substrat commun (2), et **en ce que** la couche photovoltaïquement active (5) est constituée d'une couche d'électrode semi-conductrice nanoporeuse de dioxyde de titane avec un revêtement mince de colorant photosensible (7) sur les surfaces de ladite couche d'électrode semi-conductrice, un électrolyte interpénétrant la couche d'électrode semi-conductrice nanoporeuse pour le transport des charges.

2. Dispositif photovoltaïque selon la revendication 1 comprenant une couche électriquement isolante poreuse déposée sur l'une au moins des électrodes (3, 11) entre ladite électrode et la couche photovoltaïquement active.

3. Dispositif photovoltaïque selon la revendication 2, dans lequel la couche isolante est constituée d'oxyde de zirconium.

4. Dispositif photovoltaïque selon la revendication 1, dans lequel les électrodes (3, 11) sont placées dans une configuration coplanaire avec une série d'ouvertures traversant lesdites deux électrodes (3, 11) pour exposer une électrode sous-jacente (3 ; 11).

5. Dispositif photovoltaïque selon la revendication 4, comprenant en outre une couche isolante entre lesdites électrodes (3, 11).

6. Dispositif photovoltaïque selon la revendication 1, comprenant en outre une fenêtre transparente non conductrice pour encapsuler le dispositif photovoltaïque.

7. Configuration de cellule scolaire multijonction comprenant une paire de dispositifs photovoltaïques selon l'une quelconque des revendications 1 à 5, dans laquelle les dispositifs sont placés dans une configuration en sandwich de telle sorte qu'un deuxième milieu pour le transport des charges est partagé entre lesdites dispositifs.

8. Procédé de production d'un dispositif photovoltaïque **caractérisé par** les étapes consistant à :
a) déposer par ablation laser un revêtement conducteur sur un substrat de support (2) pour former une électrode cathodique (3) et une électrode anodique (11) dans une configuration interdigitée sur le substrat de support ;
b) électrodéposer une couche conductrice sur l'une au moins des électrodes (3, 11) ; et
c) recouvrir les deux électrodes (3, 11) d'une couche semi-conductrice nanoporeuse constituée d'une couche d'électrode semi-conductrice nanoporeuse de dioxyde de titane avec un revêtement mince de colorant photosensible (7) sur les surfaces de ladite couche d'électrode semi-conductrice.

9. Procédé selon la revendication 8, comprenant l'électrodépôt de platine sur la/les êlectrode(s) (3 ; 11) .

10. Procédé selon la revendication 8 ou 9, comprenant le dépôt d'une couche isolante poreuse sur l'une des électrodes (3 ; 11) au moyen d'une étape de dépôt électrophorétique.

11. Procédé selon la revendication 10, dans lequel la couche isolante poreuse est un oxyde métallique colloïdal.
